# EUROPEAN PATENT APPLICATION

(11) **EP 4 667 969 A1**
(43) Date of publication of application: **24.12.2025**
(21) Application number: 24182908.4
(22) Date of filing: 18.06.2024
(51) Int. Cl.: G01S 13/931, H01Q 1/32, H01Q 21/20, G01S 7/03

(54) **RADAR SENSOR**

(71) Applicant: Aptiv Technologies AG, 8200 Schaffhausen (CH)
(72) Inventor: Ioffe, Alexander, 53229 Bonn (DE); Sommer, Aron, 50823 Köln (DE); Stefer, Markus, 42897 Remscheid (DE); Torres, Jairo Escudero, 50823 Köln (DE)
(74) Representative: Manitz Finsterwald Patent- und Rechtsanwaltspartnerschaft mbB

(57) **Abstract**

A radar sensor comprises a radar operation unit configured to generate electromagnetic waves to be transmitted and to detect electromagnetic waves, and at least three antenna elements configured to transmit the electromagnetic waves generated by the radar operation unit to an exterior of the radar sensor and to receive electromagnetic waves from the exterior of the radar sensor which are to be detected by the radar operation unit. The at least three antenna elements have a non-planar configuration in which respective phase centers of the antenna elements are located on a curve having a curvature greater than zero.

## Description

### FIELD

The present disclosure relates to a radar sensor and to a vehicle comprising such a radar sensor.

### BACKGROUND

Many vehicles are nowadays equipped with radar sensors since the operation of radar sensors does not depend on light and weather conditions, in contrast to optical sensors like cameras. Therefore, the use of radar sensors ensures a reliable monitoring of an external environment of a vehicle. In Advanced Driver Assistance Systems (ADAS) and in autonomous driving, radar sensors are necessary perception sensors for many automotive applications.

Such vehicles are usually equipped with four corner radar systems in order to monitor the entire surrounding of a respective vehicle, i.e. to ensure a coverage of 360° around the vehicle even within close ranges or distances with respect to the vehicle. The instrumental respective field of view of a single radar sensor, however, is directly related to the specific configuration of its antenna array. Current antenna configurations mostly have a planar structure which restricts the field of view to a maximum of 180° in the azimuth direction, i.e. in a plane extending in parallel to the ground on which the vehicle is currently located. Due to physical constraints, the azimuthal field of view which is typically usable in practice is limited to less than 160°. Many automotive applications, however, request a field of view larger than 180° to provide, for example, a coverage of 360° around the vehicle at very close distances, e.g. for parking applications. In addition, it is desirable to reduce the number of radar sensors required for a specific vehicle and, at the same time, to extend the total field of view of the radar system, e.g. at close distances with respect to the vehicle, in order to reduce the cost required for the radar sensors.

Accordingly, there is a need to provide a radar sensor which has a field of view extending over a larger angle range than 180 degrees.

### SUMMARY

The present disclosure provides a radar sensor and a vehicle according to the independent claims. Embodiments are given in the subclaims, the description and the drawings.

In one aspect, the present disclosure is directed at a radar sensor comprising a radar operation unit configured to generate electromagnetic waves to be transmitted and to detect electromagnetic waves, and at least three antenna elements configured to transmit the electromagnetic waves generated by the radar operation unit to an exterior of the radar sensor and to receive electromagnetic waves from the exterior of the radar sensor which are to be detected by the radar operation unit. The at least three antenna elements have a non-planar configuration in which respective phase centers of the antenna elements are located on a curve having a curvature greater than zero.

The radar operation unit may be configured as a monolithic microwave integrated circuit (MMIC), for example. One of these circuits may be configured to operate four antenna elements such that the radar sensor may include one or more groups of four antenna elements, for example, associated with a respective MMIC.

The at least three antenna elements are required as transmitting and/or receiving antenna elements in order to provide the capability of angle finding or determining the direction of arrival (DoA) for the electromagnetic waves reflected at objects in the external environment of the radar sensor. For example, at least one transmitting (Tx) antenna element and at least three receiving (Rx) antenna elements may be provided for the radar sensor, or at least two pairs of respective Tx and Rx antenna elements. However, the at least three antenna elements may also be configured as transceiver elements, i.e. for providing the transmitting (Tx) and receiving (Rx) functionality at the same time.

The respective phase center of the antenna element may refer and being defined with respect to a field of view of the antenna element, e.g. as a geometrical center or origin of the field of view. The antenna element may spatially extend mostly in a direction being perpendicular to the bent curve on which the phase centers of the antenna element are located. By having a curvature greater than zero, the curve defining the non-planar configuration of the antenna elements deviates from a straight line.

Due to the non-planar configuration or arrangement of the phase centers on a non-linear curve, the antenna elements are distributed on a non-planar or curvilinear surface. In other words, the center of at least one antenna element deviates from a plane which may be provided e.g. by the spatial location of at least two other antenna elements. Such a curvilinear arrangement of the centers of the antenna element allows for extending the instrumental field of view of the entire radar sensor to more than 180°. In addition, the radar sensor may be adapted in a conformal manner e.g. to a component of a vehicle at which the radar sensor may be installed, e.g. at a bumper or at a part of the vehicle body.

According to an embodiment, each of the at least three antenna elements may be associated with one of at least two antenna groups which may differ from each other regarding at least one specific characteristic of one or more antenna elements associated with the respective antenna group. The specific characteristic may be related to a spatial arrangement, a number, a type and/or an operation mode of the antenna elements belonging to two different groups.

In other words, for this embodiment there is at least one irregularity between the at least three antenna elements such that these can be associated with the two or more antenna groups. For example, two or more antenna elements may belong to a first antenna group and may be arranged closer to each other than at least one further antenna element belonging to a second group. That is, the distance between two or more antenna elements of the first group may be smaller than the distance between other adjacent antenna elements. Hence, the antenna elements may have an uneven or irregular distribution at the curvilinear surface. The arrangement of at least two antenna elements close to each other may allow for an improved accuracy of the radar sensor with respect to angle finding or determining the direction of arrival of the electromagnetic waves reflected by objects located in the external environment of the radar sensor.

According to a further example, distances between the respective phase centers of the antenna elements may be different for at least two adjacent pairs of the antenna elements. If the radar sensor includes three antenna elements only, for example, one center antenna element located between the other two antenna elements may belong to both adjacent pairs, but it may belong to one of two antenna groups, together with one of the two other antenna elements. In this case, the two distances of the center antenna element to the two other antenna elements may differ from each other, and this arrangement may be the specific characteristic by which the two antenna groups differ from each other.

Additionally or alternatively, the antenna elements of the antenna groups may be different antenna types or may be operated in different operation modes. For example, the antenna elements of a first group may be operated for being able to perform angle finding, while the antenna elements of a second group may be operated as a synthetic aperture radar (SAR) for which details will be provided below. As another example, an antenna element being operated as a SAR may be located between two further antenna elements being operated in a conventional manner. Hence, a first antenna group may include an antenna element being operated as a SAR, while the second antenna group may include conventionally operated antenna elements only.

The two or more antenna groups and their distinguishing one or more characteristics may be defined in accordance with requirements derived from the intended application of the radar sensor. For example, the two or more antenna groups may be adapted to an intended position and an intended purpose of the radar sensor when being installed at a specific vehicle.

According to a further embodiment, at least one of the antenna elements may be configured to be operated as a synthetic aperture radar (SAR). For example, a signal processing algorithm executed by the radar operation unit may provide an operation mode as a SAR for the at least one antenna element.

A synthetic aperture radar requires a motion of the radar system, e.g. a motion of a vehicle on which the radar system is installed, in order to synthesize a respective aperture along a driven path of the radar antenna element under consideration. This leads to an extended aperture size, e.g. between two points in time during the movement of the radar system or the vehicle between which the electromagnetic waves transmitted and received by the radar system are acquired. By this means, a high azimuth resolution can be achieved. Such a SAR is typically used as a side-looking radar of airborne or spaceborne radar systems.

By configuring at least one antenna element to be operated as a synthetic aperture radar, the perception capabilities of the radar sensor may be strongly improved. For example, high-resolution images may be provided by the SAR which may be relevant for near-range applications like parking systems of a vehicle.

According to a further embodiment, a boresight direction may be defined for each antenna element, and each of the at least three antenna elements may be associated with one of a first region and a second region. A respective angle between the boresight direction of a respective one of the antenna elements associated with the first region and the boresight direction of a respective one of the antenna elements associated with the second region may be greater than the angles between the boresight directions of the antenna elements associated with the first region and the angles between the boresight directions of the antenna elements associated with the second region.

The boresight direction may be defined in relation to a respective field of view associated with the respective antenna element. The boresight direction may be related to the main lobe of the radar radiation transmitted or received by the respective antenna element. For the present embodiment, the respective field of view of the antenna elements associated with the first region may be aligned to another direction as the respective field of view of the antenna elements associated with the second region. In other words, the antenna elements associated with the two different regions may look into two different directions. Due to this, a total coverage of more than 180° may be ensured, and the coverage provided by the respective region including antenna elements may be adapted to the specific requirements requested for the radar sensor, e.g. within a vehicle.

Furthermore, if each of the at least three antenna elements is associated with one of the first region and the second region, the first region and the second region may be spaced apart from each other such that distances between the phase centers the antenna elements associated with the first region may be smaller than a minimum distance between the first region and the second region. In other words, the at least three antenna elements may form the two antenna groups mentioned above, and these two antenna groups may have such a spatial arrangement or location such that the antenna elements of a respective antenna group may be positioned close to each other while the two groups may be spatially separated. Such a grouping of antenna elements, e.g. in the first region, may improve the accuracy for determining the direction of arrival (DoA) of electromagnetic waves reflected at objects or for angle finding which may be performed by the radar sensor for objects in its external environment.

Moreover, the spatially separated antenna groups may be spatially located and aligned in such a manner that the total field of view or total coverage of the radar sensor is optimized. However, the antenna elements of the radar sensor may also have a multiple input multiple output (MIMO) configuration including virtual antenna elements. That is, the above description may also apply for the phase centers of such virtual antennas. In addition, the two antenna groups may also be adjacent to each other, i.e. as an alternative to the embodiment described above.

The number of antenna elements associated with the first region may be greater than the number of antenna elements associated with the second region. That is, a plurality of antenna elements may be grouped within the first region in order to improve the capabilities and the accuracy of the radar sensor regarding angle finding or determining the direction of arrival (DoA). In detail, at least three antenna elements may be associated with the first region and at least one antenna element may be associated with the second region. In addition, at least one antenna element associated with the second region may be configured to be operated as a synthetic aperture radar (SAR). Providing at least three antenna elements for the first region may improve the accuracy of angle finding or determining the direction of arrival for the area in the external environment of the radar sensor to which the antenna elements of the first region are facing. If the radar sensor is installed at a vehicle, for example, the at least three antenna elements of the first region may be aligned substantially to a longitudinal direction or forward direction of the vehicle such that the capabilities of the radar sensor in the forward direction regarding angle finding may be improved. The operation mode as a synthetic aperture radar (SAR) for the one or more antenna elements associated with the second region may be regarded as a side-looking radar which provides a huge aperture if the radar sensor is installed e.g. at a vehicle. The synthetic aperture radar may provide high-resolution images for near-range applications.

The first region and the second region may each include at least one antenna element having a phase center which may be spaced apart from the curve providing the non-planar configuration of the other antenna elements. That is, in each of the two regions at least one further antenna element may be provided which is arranged outside or away from the curve defining the non-planar configuration of the other at least three antenna elements.

For example, at least two antenna elements may be arranged on top of each other along a vertical direction within the first and second regions. Such an arrangement of antenna elements with at least two antenna elements on top of each other may allow for an additional elevation measurement, i.e. the determination of elevation angles for objects in the external environment of the radar sensor, i.e. in addition to the azimuth measurement for which the at least three antenna elements are originally provided.

Moreover, the centers of the antenna element may be arranged in different rows, and the antenna elements of each row may have a non-planar configuration in which respective phase centers of the antenna elements are located on a respective curve having a curvature greater than zero. In other words, each row may be associated with a respective curve deviating from a straight line for providing the non-planar configuration for each row. Two or more rows of antenna elements may facilitate the installation of the radar sensor e.g. at a vehicle and enable an accurate measurement of elevation angles of objects. Furthermore, one row of antenna elements may be provided for transmitting electromagnetic waves, whereas more than one row, e.g. three rows, may be provided for receiving electromagnetic waves. This may improve the accuracy of angle finding.

In another aspect, the present disclosure is directed at a vehicle comprising at least one radar sensor as described above.

According to an embodiment, the at least one radar sensor may be arranged at a corner of a body of the vehicle such that more antenna elements are aligned to a front of the vehicle than to a side of the vehicle. Due to this, the angle finding capacity of the radar sensor may be improved with respect to the driving direction of the vehicle.

Furthermore, the at least one radar sensor may be arranged at a front of a body of the vehicle such that at least two antenna elements may be aligned to a side of the vehicle and the rest of the antenna elements is aligned to a front of the vehicle. That is, this type of radar sensor may be denoted as a front radar although may comprise antenna elements being aligned to or looking at a side of the vehicle. Moreover, the vehicle may also include such a front radar and further radar sensors arranged at one or more corners of the vehicle.

Moreover, a boresight direction of at least three antenna elements of the radar sensor may be substantially aligned with a longitudinal axis of the vehicle, and a boresight direction of at least one antenna element of the radar sensor may be substantially aligned with a lateral axis of the vehicle in order to be operated as a synthetic aperture radar (SAR) when the vehicle is moving. The one or more radar sensors may be arranged again at respective corners of a body of the vehicle such that the vehicle may be equipped with four radar sensors, each of which may be located at a respective corner. Providing at least three antenna elements facing substantially along the longitudinal axis of the vehicle may improve the accuracy for determining the direction of arrival of electromagnetic waves reflected by objects or of angle finding with respect to objects located in the external environment of the vehicle. Since the longitudinal axis defines the forward and backward directions for the movement of the vehicle, such an improved accuracy may refer to the forward and backward directions of the vehicle's movements. At the same time, the synthetic aperture radar (SAR) providing a huge aperture may be regarded as a side-looking radar for the vehicle which may be suitable for near-range applications like a parking assistant.

According to a further embodiment, the curve providing the non-planar configuration of the antenna elements may be adapted to a contour of an outer surface of the vehicle. That is, the outer surface of the vehicle may have the same curvature as the curve on which the centers of the antenna elements are located in order to provide the non-planar configuration. By this means, the radar sensor may be adapted to the available installation space at the vehicle e.g. at a bumper or at a part of the vehicle body. Moreover, the number and the location of transmitting and receiving antenna elements may be determined in accordance with a desired radiation pattern of the radar sensor with respect to the vehicle.

### DRAWINGS

Exemplary embodiments and functions of the present disclosure are described herein in conjunction with the following drawings, showing schematically:
- Fig. 1: a radar sensor having a non-planar configuration and a plan view of a vehicle comprising such a radar sensor;
- Fig. 2: a perspective view of a corner of the vehicle of Fig. 1 at which the radar sensor is located and an illustration of the SAR principle; and
- Fig. 3: an enlarged section of Fig. 1 illustrating the total field of view of the radar sensor.

### DETAILED DESCRIPTION

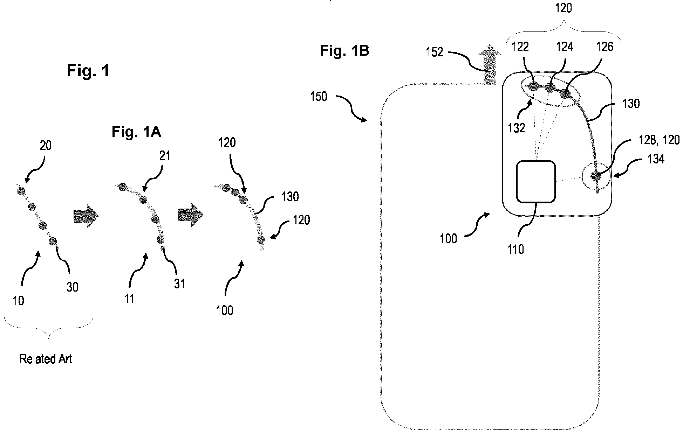

Fig. 1 schematically depicts a radar sensor 100 which includes a radar operation unit 110 (see Fig. 1B) being configured to generate electromagnetic waves to be transmitted and configured to detect electromagnetic waves, and antenna elements 120 which are communicatively connected to the radar operation unit 110. The antenna elements 120 are configured to transmit the electromagnetic waves generated by the radar operation unit 110 to an exterior of the radar sensor 100 and to receive the electromagnetic waves from the exterior of the radar sensor 100 which are to be detected by the radar operation unit 110.

The radar operation unit 110 is configured as a monolithic microwave integrated circuit (MMIC), for example. One of these circuits is configured to operate four antenna elements 120.

In Fig. 1A, the respective antenna configuration of different radar sensors 10, 11, 100 is schematically depicted. According to the related art, the radar sensor 10 has a configuration in which antenna elements 20 are arranged linearly along a straight line 30. That is, the antenna elements 20 have a planar configuration such that the instrumental field of view of the radar sensor 10 according to the related art is restricted to a maximum angle range of 180° in the plane of Fig. 1 which may also be regarded as an azimuth plane. In practice, however, the usable azimuth field of view of the radar sensor 10 according to the related art is typically limited to be less than 160° due to physical constraints.

Fig. 1A also depicts the radar sensor 11 including antenna elements 21 which have a non-planar configuration. The antenna elements 21 are arranged at a curve or contour 31 which deviates from the straight line 30 in that it has a curvature greater than zero. The non-planar configuration of the antenna element 21 allows for extending the field of view of the radar sensor to be greater than 180°. However, the capabilities regarding angle finding or determining the direction of arrival (DoA) for electromagnetic waves reflected at objects in the external environment of the radar sensor 11 may be restricted for the equidistant arrangement of the antenna elements 21 of the radar sensor 11.

Therefore, the radar sensor 100 according to the disclosure includes the antenna elements 120 having a non-planar configuration and different distances between at least two pairs of the antenna elements 120, as shown on the right side of Fig. 1A and in Fig. 1B. In detail, respective phase centers of the antenna elements 120 are located on a curve 130 having a curvature greater than zero. In addition, the antenna elements 120 form two antenna groups which are located in different regions, i.e., a first region 132 and a second region 134 (see Fig. 1B).

It is noted that the straight line 30 and the curves 31, 130 are virtual lines or curves only which are shown for illustration only. In practice, however, the radar sensors 10, 11, 100 do not include a visible element corresponding to the straight line 30 or to the curves 31, 130.

The first region 132 and the second region 134 are spaced apart from each other such that a respective distance between the antenna elements 120 within the first region 132 is smaller than a minimum distance between the first region 132 and the second region 134. At least three antenna elements 120 are arranged close together in the first region 132, whereas the second region 134 includes at least one antenna element 120 which is spaced apart from the first antenna group of at least three antenna elements 120 associated with the first region 132.

As shown in Fig. 1B, the radar sensor 100 is installed at a corner of a vehicle 150. For the vehicle 150, a moving or forward direction 152 is indicated by an arrow. In practice, each of four corners of the vehicle 150 includes a respective radar sensor 100 such that the description provided herein is also valid for each of such four corner radar sensors 100 of the vehicle 150.

The antenna elements 120 associated with the first region 132 are substantially facing the forward or moving direction 152 of the vehicle 150. In other words, the respective main lobe transmitted by the antenna elements 120 associated with the first region 132 is substantially aligned with a longitudinal axis of the vehicle 150 extending in the forward direction 152 as shown in Fig. 1B if the vehicle 150 is driving straight ahead.

The antenna elements 120 associated with the first region 132 include at least three antenna elements 122, 124, 126 which may be referred to as innermost antenna element 122, middle antenna element 124 and outermost antenna element 126 with respect to the vehicle and which are located close to each other. Although three antenna elements 122, 124, 126 are shown in Fig. 1B, at least two antenna elements 122, 124 are the minimum requirement for the first region 132 in order to perform angle finding or the determination of a respective direction of arrival (DoA) for electromagnetic waves reflected at objects in the environment of the radar sensor 100 and the vehicle 150. At least one of these at least two antenna elements 122, 124 within the first region 132 must be able to transmit electromagnetic waves, i.e. to operate as a Tx-element, whereas both of these at least two antenna elements 122, 124 within the first region 132 must be able to receive electromagnetic waves, i.e. to operate as a Rx-element, in order to ensure a phase comparison for angle finding.

Due to the close arrangement of the at least three antenna elements 122, 124, 126 within the first region 132, the accuracy is improved for angle finding or the determination of the respective direction of arrival (DoA). That is, an accurate DoA performance can be ensured if conventional angle finding (AF) methods are applied to the signals provided by the antenna elements 122, 124, 126 of the first region 132. However, such conventional AF methods have to be adjusted to the non-planar contour or curve 130 on which the antenna elements 122, 124, 126 are arranged.

Moreover, at least one antenna element 128 is associated with the second region 134 and faces a side of the vehicle 150. That is, a center line of a radar lobe transmitted by the at least antenna element 128 is aligned with a direction being perpendicular to the forward or moving direction 152. Hence, the at least one antenna element 128 associated with the second region 134 may be regarded as a side-looking radar, and it represents a second antenna group for the plurality of antenna elements 120.

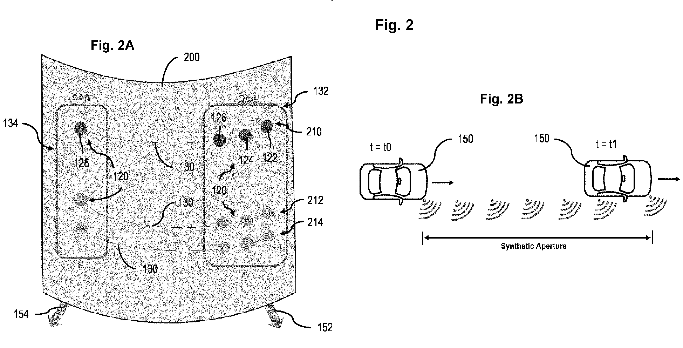

The antenna element 128 associated with the second region 134 is configured to be operated as a synthetic aperture radar (SAR) which makes use of the movement of the vehicle in order to create a virtual or synthetic aperture which will be explained in detail in context of Fig. 2B below.

As mentioned above, the antenna elements 122, 124 ,126 associated with the first region 132 and the at least one antenna element 128 associated with the second region 134 have different alignment directions. The term alignment direction refers to a center line of a main lobe transmitted or received by the respective antenna element 120 or to a boresight direction defined with respect to a respective field of view of each antenna element 120.

In detail, an angle between the alignment direction of the outermost antenna element 126 associated with first region 132 and the alignment direction of the antenna element 128 associated with the second region 134 is greater than the angles between the respective alignment directions of the antenna elements 122, 124, 126 associated with the first region 132. In addition, the angle between the alignment direction of the innermost antenna element 122 associated with the first region 132 and the alignment direction of the antenna element 128 of the second region 134 may be 90° or even more, for example.

In Fig. 2A, a perspective view of the corner of the vehicle 150 is shown at which the radar sensor 100 is located. The corner of the vehicle 150 is represented by a conformal surface 200 which may be an outer surface e.g. of a bumper of a part of the body of the vehicle 150. The conformal surface 200 provides a non-planar surface on which the antenna elements 120 of the radar sensor 100 are distributed. The vertical or moving direction of the vehicle 150 is again illustrated as an arrow, and in addition a lateral direction 154 being perpendicular to the forward direction 152 or to the longitudinal axis of the vehicle 150 is also indicated by a further arrow.

The antenna elements 120 which are associated with the first region 132 and with the second region 134, respectively, are arranged in different rows 210, 212, 214 at the conformal surface 200. The rows 210, 212, 214 are displaced from each other in a vertical direction being perpendicular to a horizontal direction which is shown for the vehicle 150 in Fig. 1B and which extends parallel to a ground on which the vehicle is currently located.

For each of the rows 210, 212, 214, a respective curve 130 having a curvature greater than zero is also depicted in the same manner as in Fig. 1B. In the vertical direction, groups of antenna elements 120 are arranged on top of each other within the first region 132 and within the second region 134. In the vertical direction the phase centers of the antenna elements 120 are located almost on a straight line for this specific example. For example, the antenna elements 120 of the first row 210 are configured as transmitting antenna elements, whereas the antenna elements 120 of the second row 212 and of the third row 214 are configured as receiving antenna elements.

Due to the vertical displacement between the rows of antenna elements 210, 212, 214, an elevation measurement is enabled for the radar sensor 100. That is, elevation angles of objects located in the external environment of the vehicle 150 and of the radar sensor 100 can be determined with respect to the radar sensor 100 due to the vertical displacement of the antenna elements 120, i.e. for example with respect to the horizontal plane for which the vehicle 150 is shown in Fig. 1B.

In Figs. 1B, Fig. 2A and Fig. 3, the antenna elements 120 are depicted in a very simplified manner as dots only. However, it will be understood that the antenna elements 120 have a spatial extension which is not shown in the Figures. For example, the antenna elements 120 may have an elongated shape in the vertical direction or in the horizontal direction. However, the principles as described in the present disclosure do not depend on the specific elongated shape of the respective antenna elements 120.

As already mentioned above, the antenna elements 120 within the first region 132 are located close to each other along the respective curve 130, which also holds true for the antenna elements 120 of the different rows 210, 212, 214 associated with the first region 132. The antenna elements 120 associated with the first region 132 are therefore configured for an accurate DoA performance by conventional angle finding (AF) methods which are adjusted to the non-planar conformal surface 200.

In contrast, the antenna elements 120 associated with the second region 134 are configured to provide a synthetic aperture radar (SAR) when the vehicle 150 is moving. In Fig. 2B, the vehicle 150 is depicted for two different points in time, i.e. for t = to and t = t1. During the time interval between these time points t0 and t1, the antenna elements 128 being configured to provide a synthetic aperture radar (SAR) transmit electromagnetic waves to the side or lateral direction with respect to the vehicle 150.

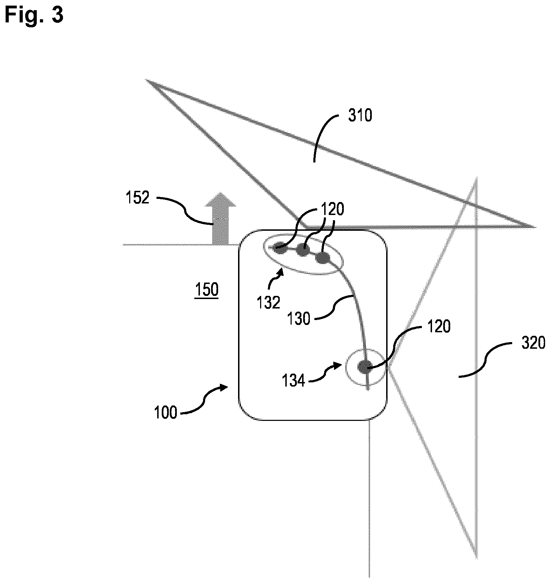

Due to this, the aperture along the driven path of the vehicle 150 and of the antenna elements 120, 128 within the second region 134 can be synthesized for the signals provided by the receiving antenna elements 128 within the second region 134. This leads to an extended aperture size or synthetic aperture as indicated in Fig. 2B and therefore to a high azimuth resolution, i.e. in the plane perpendicular to the vertical direction with respect to the vehicle 150. The azimuthal resolution is at maximum in a direction perpendicular to the forward or moving direction 152, i.e. in the lateral direction 154. In the forward direction 152 itself, the synthetic aperture radar has a very limited resolution. Moreover, the synthetic aperture radar relies on a movement of the radar sensor 100, i.e. of the vehicle 150. Although a corner radar is shown in Fig. 2B for explaining the SAR principle, the explanations also hold true for a side-looking radar as provided by the antenna element 120, 128 as shown in Fig. 1B and Fig. 3.

Fig. 3 depicts an enlarged section of Fig. 1 at the corner of the vehicle 150 and illustrates the total field of view of the radar sensor 100. The antenna elements 120 associated with the first region 132 provide a forward-looking field of view of the radar sensor 100 which is indicated by 310. At the same time, the antenna elements 120 associated with the second region 134 provide a side-looking field of view which is indicated by 320. Altogether, the total field of view of the radar sensor 100 extends over an angle range much larger than 180° within the azimuth plane.

According to the disclosure, a radar sensor may comprise a radar operation unit configured to generate electromagnetic waves to be transmitted and to detect electromagnetic waves, and at least three antenna elements configured to transmit the electromagnetic waves generated by the radar operation unit to an exterior of the radar sensor and to receive electromagnetic waves from the exterior of the radar sensor which are to be detected by the radar operation unit. The at least three antenna elements may have a non-planar configuration in which respective phase centers of the antenna elements may be located on a curve having a curvature greater than zero.

According to various embodiments, each of the at least three antenna elements may be associated with one of at least two antenna groups which may differ from each other regarding at least one specific characteristic of one or more antenna elements associated with the respective antenna group.

According to various embodiments, distances between the respective phase centers of the antenna elements may be different for at least two adjacent pairs of the antenna elements.

According to various embodiments, at least one of the antenna elements may be configured to be operated as a synthetic aperture radar (SAR).

According to various embodiments, a boresight direction may be defined for each antenna element, and each of the at least three antenna elements may be associated with one of a first region and a second region. A respective angle between the boresight direction of a respective one of the antenna elements associated with the first region and the boresight direction of a respective one of the antenna elements associated with the second region may be greater than the angles between the boresight directions of the antenna elements associated with the first region and the angles between the boresight directions of the antenna elements associated with the second region.

According to various embodiments, each of the at least three antenna elements may be associated with one of a first region and a second region, and the first region and the second region may be spaced apart from each other such that distances between the phase centers the antenna elements associated with the first region may be smaller than a minimum distance between the first region and the second region.

According to various embodiments, the number of antenna elements associated with the first region may be greater than the number of antenna elements associated with the second region.

According to various embodiments, at least three antenna elements may be associated with the first region and at least one antenna element may be associated with the second region.

According to various embodiments, at least one antenna element associated with the second region may be configured to be operated as a synthetic aperture radar (SAR).

According to various embodiments, the first region and the second region may each include at least one antenna element having a phase center which may be spaced apart from the curve providing the non-planar configuration of the other antenna elements.

According to various embodiments, the centers of the antenna element may be arranged in different rows, and the antenna elements of each row may have a non-planar configuration in which respective phase centers of the antenna elements are located on a respective curve having a curvature greater than zero.

According to the disclosure, a vehicle may comprise at least one radar sensor as described above.

According to various embodiments, the at least one radar sensor may be arranged at a corner of a body of the vehicle such that more antenna elements are aligned to a front of the vehicle than to a side of the vehicle.

According to various embodiments, the at least one radar sensor may be arranged at a front of a body of the vehicle such that at least two antenna elements may be aligned to a side of the vehicle and the rest of the antenna elements is aligned to a front of the vehicle.

According to various embodiments, a boresight direction of at least three antenna elements of the radar sensor may be substantially aligned with a longitudinal axis of the vehicle, and a boresight direction of at least one antenna element of the radar sensor may be substantially aligned with a lateral axis of the vehicle in order to be operated as a synthetic aperture radar (SAR) when the vehicle is moving.

According to various embodiments, the curve providing the non-planar configuration of the antenna elements may be adapted to a contour of an outer surface of the vehicle.

### Reference numeral list

- 10: radar sensor according to the related art
- 11: radar sensor having a non-planar configuration
- 20, 21: antenna element
- 30: straight line
- 31: non-linear curve
- 100: radar sensor according to the disclosure
- 110: radar operation unit
- 120: antenna element
- 122: innermost antenna element
- 124: middle antenna element
- 126: outermost antenna element
- 128: antenna element for SAR
- 130: non-planar curve or contour
- 132: first region
- 134: second region
- 150: vehicle
- 152: forward or moving direction
- 154: lateral direction
- 200: conformal surface
- 210: first row of antenna elements
- 212: second row of antenna elements
- 214: third row of antenna elements
- 310: forward-looking field of view
- 320: side-looking field of view

## Claims

1. Radar sensor (100), comprising:
a radar operation unit (110) configured to generate electromagnetic waves to be transmitted and to detect electromagnetic waves, and
at least three antenna elements (120) configured to transmit the electromagnetic waves generated by the radar operation unit (120) to an exterior of the radar sensor (100) and to receive electromagnetic waves from the exterior of the radar sensor (100) which are to be detected by the radar operation unit (110),
wherein the at least three antenna elements (120) have a non-planar configuration in which respective phase centers of the antenna elements (120) are located on a curve (130) having a curvature greater than zero.

2. Radar sensor (100) according to claim 1, wherein
each of the at least three antenna elements (120) is associated with one of at least two antenna groups, and
the at least two antenna groups differ from each other regarding at least one specific characteristic of one or more antenna elements (120) associated with the respective antenna group.

3. Radar sensor (100) according to claim 1 or 2, wherein
at least one of the antenna elements (120, 128) is configured to be operated as a synthetic aperture radar (SAR).

4. Radar sensor (100) according to any one of claims 1 to 3, wherein
for each antenna element (120), a boresight direction is defined,
each of the at least three antenna elements (120) is associated with one of a first region (132) and a second region (134), and
a respective angle between the boresight direction of a respective one of the antenna elements (120) associated with the first region (132) and the boresight direction of a respective one of the antenna elements (120) associated with the second region (134) is greater than the angles between the boresight directions of the antenna elements (120) associated with the first region (132) and the angles between the boresight directions of the antenna elements (120) associated with the second region (134).

5. Radar sensor (100) according to any one of claims 1 to 4, wherein
each of the at least three antenna elements (120) is associated with one of a first region (132) and a second region (134), and
the first region (132) and the second region (134) are spaced apart from each other such that distances between the phase centers of the antenna elements (120, 122, 124, 126) associated with the first region (132) are smaller than a minimum distance between the first region (132) and of the second region (134).

6. Radar sensor (100) according to claim 4 or 5, wherein
the number of antenna elements (120) associated with the first region (132) is greater than the number of antenna elements (120) associated with the second region (134).

7. Radar sensor (100) according to claims 6, wherein
at least three antenna elements (120, 122, 124, 126) are associated with the first region (132) and at least one antenna element (120, 128) is associated with the second region (134).

8. Radar sensor (100) according to any one of claims 4 to 7, wherein
at least one antenna element (120, 128) associated with the second region (134) is configured to be operated as a synthetic aperture radar (SAR).

9. Radar sensor (100) according to any one of claims 4 to 8, wherein
the first region (132) and the second region (134) each include at least one antenna element (120) having a phase center which is spaced apart from the curve (130) providing the non-planar configuration of the other antenna elements (120).

10. Radar sensor (100) according to claims 9 or 10, wherein
the phase centers of the antenna elements (120) are arranged in different rows (210, 212, 214) wherein the antenna elements (120) of each row have a non-planar configuration in which respective phase centers of the antenna elements (120) are located on a respective curve (130) having a curvature greater than zero.

11. Vehicle (150) comprising at least one radar sensor (100) according to any one of claims 1 to 11.

12. Vehicle (150) according to claim 11, wherein
the at least one radar sensor (100) is arranged at a corner of a body of the vehicle (150) such that more antenna elements (120) are aligned to a front of the vehicle (150) than to a side of the vehicle (150).

13. Vehicle (150) according to claim 11, wherein
the at least one radar sensor (100) is arranged at a front of a body of the vehicle (150) such that at least two antenna elements (120) are aligned to a side of the vehicle (150) and the rest of the antenna elements (120) is aligned to a front of the vehicle (150).

14. Vehicle (150) according to any one of claims 11 to 13, wherein
a boresight direction of at least three antenna elements (120, 122, 124, 126) of the radar sensor (100) is substantially aligned with a longitudinal axis of the vehicle (150), and
a boresight direction of at least one antenna element (120, 128) of the radar sensor (100) is substantially aligned with a lateral axis of the vehicle (150) in order to be operated as a synthetic aperture radar (SAR) when the vehicle (150) is moving.

15. Vehicle (150) according to any one of claims 11 to 14, wherein
the curve (130) providing the non-planar configuration of the antenna elements (120) is adapted to a contour of an outer surface (200) of the vehicle (150).
